# EUROPEAN PATENT APPLICATION

(11) **EP 2 575 022 A1**
(43) Date of publication of application: **03.04.2013**
(21) Application number: 12744514.6
(22) Date of filing: 13.02.2012
(51) Int. Cl.: G06F 3/048

(54) **METHOD AND DEVICE FOR UNLOCKING OPERATING SYSTEM**

(30) Priority: 12.02.2011 CN 201110036820
(71) Applicant: Huawei Device Co., Ltd., Shenzhen, Guangdong 518129 (CN)
(72) Inventor: LI, Hongxi, Shenzhen Guangdong 518129 (CN)
(74) Representative: Kreuz, Georg Maria
(86) International application number: PCT/CN2012/071046
(87) International publication number: WO 2012/107000

(57) **Abstract**

Embodiments of the present invention provide an unlocking method of a touch screen terminal and a touch screen terminal. The method includes: when a touch screen terminal is in a locked status, displaying, by the touch screen terminal, an unlocking position and icon(s) of one group of application(s) of the touch screen terminal, where the one group of application(s) are determined by the touch screen terminal according to related information of executing applications by the touch screen terminal; detecting, by the touch screen terminal, whether an icon of an application among the one group of application(s) is dragged to the unlocking position; and when the touch screen terminal detects that the icon of the application among the one group of application(s) is dragged to the unlocking position, executing, by the touch screen terminal, an unlocking operation and starting running the detected application. Because the one group of application(s) are determined by the touch screen terminal according to the related information of executing applications by the touch screen terminal, the flexibility of the unlocking operation is improved, and further, the efficiency of the unlocking operation is improved.

## Description

This application claims priority to Chinese Patent Application No. CN 201110036820.2, filed with the Chinese Patent Office on February 12, 2011, and entitled "UNLOCKING METHOD OF TOUCH SCREEN TERMINAL AND TOUCH SCREEN TERMINAL", which is incorporated herein by reference in its entirety.

### FIELD OF THE INVENTION

Embodiments of the present invention relate to information processing technologies, and in particular, to an unlocking method of a touch screen terminal and a touch screen terminal.

### BACKGROUND OF THE INVENTION

With the development of science and technology, more and more touch screen terminals enter daily lives of people, such as mobile phones, digital photo frames and tablet computers. In order to prevent faulty operations, such as an unexpected switch-on, of the touch screen terminal, a locking operation may be executed on the touch screen terminal when no operation is performed for a long time or a locking operation may be executed on the touch screen terminal by using a specific function key, so that the touch screen terminal is in a locked working mode. When the touch screen terminal is in the locked working mode, icons of previously designated applications may be displayed on the touch screen of the touch screen terminal. When the touch screen terminal in the locked working mode needs to be switched on, a user may drag any one of the icons of the previously designated applications to a designated unlocking position on the screen, and in this case, the touch screen terminal will execute an unlocking operation, so that the touch screen terminal will be in an unlocked working mode (namely, a normal working mode) and meanwhile starts running the application corresponding to the icon dragged by the user.

However, because the icons of applications displayed on the touch screen are previously designated fixed icons while the touch screen terminal is in the locked working mode, the flexibility of the unlocking operation is reduced.

### SUMMARY OF THE INVENTION

Embodiments of the present invention provide an unlocking method of a touch screen terminal and a touch screen terminal, to improve the flexibility of an unlocking operation.

An embodiment of the present invention provides an unlocking method of a touch screen terminal, including:
displaying, by the touch screen terminal, an unlocking position and icon(s) of one group of application(s) of the touch screen terminal when the touch screen terminal is in a locked status, where the one group of application(s) are determined by the touch screen terminal according to related information of executing applications by the touch screen terminal;
detecting, by the touch screen terminal, whether an icon of an application among the one group of application(s) is dragged to the unlocking position; and
executing, by the touch screen terminal, an unlocking operation and starting running the detected application when the touch screen terminal detects that the icon of the application among the one group of application(s) is dragged to the unlocking position.

An embodiment of the present invention also provides a touch screen terminal, including:
a displaying module, configured to display an unlocking position and icons of one group of application(s) of the touch screen terminal when the touch screen terminal is in a locked status, where the one group of application(s) are determined by the touch screen terminal according to related information of executing applications by the touch screen terminal;
a detecting module, configured to detect whether an icon of an application among the one group of application(s) is dragged to the unlocking position; and
an unlocking module, configured to execute an unlocking operation and start running the application detected by the detecting module, when the detecting module detects that the icon of the application among the one group of application(s) is dragged to the unlocking position.

It can be learned from the above technical solutions that, in the embodiments of the present invention, when the touch screen terminal is in the locked status, the unlocking position and the icon(s) of one group of application(s) of the touch screen terminal are displayed through the touch screen terminal, and then the touch screen terminal detects whether an icon of an application among the one group of application(s) is dragged to the unlocking position, so that when the touch screen terminal detects that the icon of the application among the one group of application(s) is dragged to the unlocking position, the touch screen terminal can execute the unlocking operation and start running the detected application. Because the one group of application(s) are determined by the touch screen terminal according to the related information of executing applications by the touch screen terminal, the flexibility of the unlocking operation is improved, and further, the efficiency of the unlocking operation is improved.

### BRIEF DESCRIPTION OF THE DRAWINGS

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and persons of ordinary skill in the art can derive other drawings from these accompanying drawings without creative efforts.
FIG. 1 is a schematic flow chart of an unlocking method of a touch screen terminal provided by Embodiment 1 of the present invention;
FIG. 2 is a schematic diagram of one group of application(s) 1 determined in the unlocking method of a touch screen terminal provided by Embodiment 1 of the present invention;
FIG. 3 is another schematic diagram of one group of application(s) 1 determined in the unlocking method of a touch screen terminal provided by Embodiment 1 of the present invention;
FIG. 4 is a schematic diagram of one group of application(s) 2 determined in the unlocking method of a touch screen terminal provided by Embodiment 1 of the present invention;
FIG. 5 is another schematic diagram of one group of application(s) 2 determined in the unlocking method of a touch screen terminal provided by Embodiment 1 of the present invention;
FIG. 6 is a schematic diagram of one group of application(s) 3 determined in the unlocking method of a touch screen terminal provided by Embodiment 1 of the present invention;
FIG. 7 is another schematic diagram of one group of application(s) 3 determined in the unlocking method of a touch screen terminal provided by Embodiment 1 of the present invention;
FIG. 8 is a schematic structural diagram of a touch screen terminal provided by Embodiment 2 of the present invention; and
FIG. 9 is another schematic structural diagram of the touch screen terminal provided by Embodiment 2 of the present invention.

### DETAILED DESCRIPTION OF THE EMBODIMENTS

To make the objectives, technical solutions, and advantages of the present invention more comprehensible, the following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without creative efforts shall fall within the protection scope of the present invention.

It should be noted that, the touch screen terminal involved in the embodiments of the present invention includes, but is not limited to, a mobile phone, a personal digital assistant (Personal Digital Assistant, PDA for short), a wireless handheld device, a wireless netbook, a portable computer, an MP3 player, and an MP4 player.

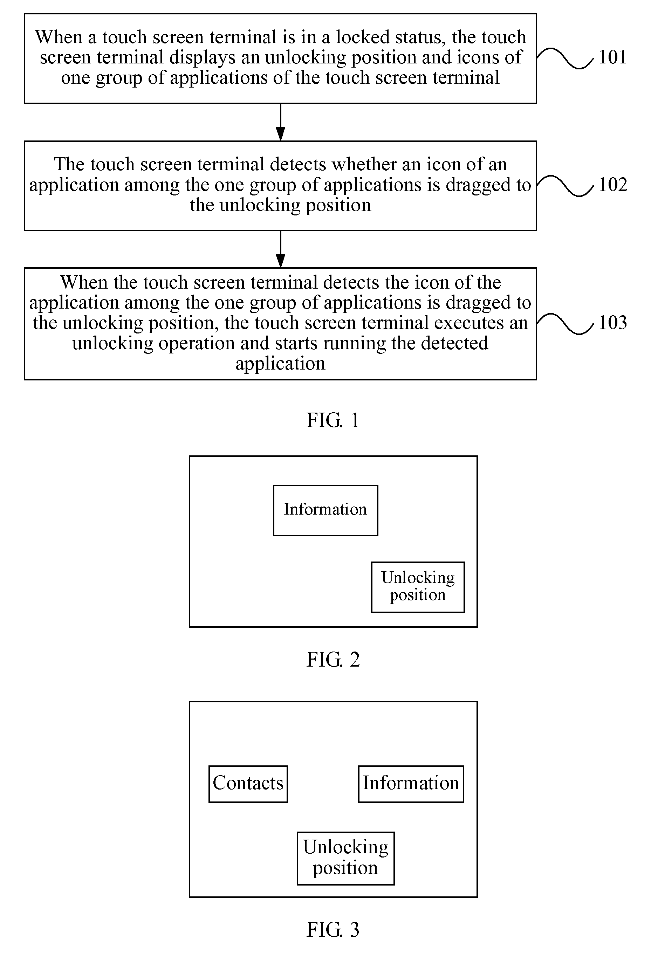

FIG. 1 is a schematic flow chart of an unlocking method of a touch screen terminal provided by Embodiment 1 of the present invention, and as shown in FIG. 1, the unlocking method of a touch screen terminal of this embodiment may include steps below:
Step 101: A touch screen terminal displays an unlocking position and icons of one group of application(s) of the touch screen terminal when the touch screen terminal is in a locked status, where the one group of application(s) are determined by the touch screen terminal according to related information of executing applications by the touch screen terminal.
Step 102: The touch screen terminal detects whether an icon of an application among the one group of application(s) is dragged to the unlocking position.
Step 103: The touch screen terminal executes an unlocking operation and starts running the detected application when the touch screen terminal detects that the icon of the application among the one group of application(s) is dragged to the unlocking position.

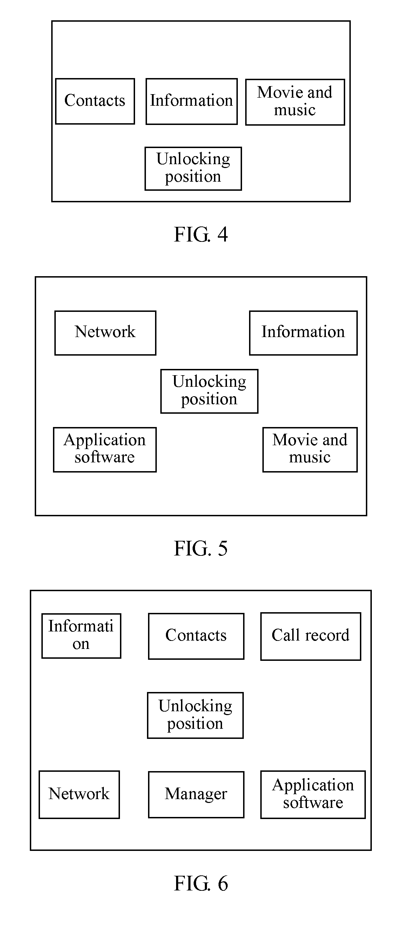

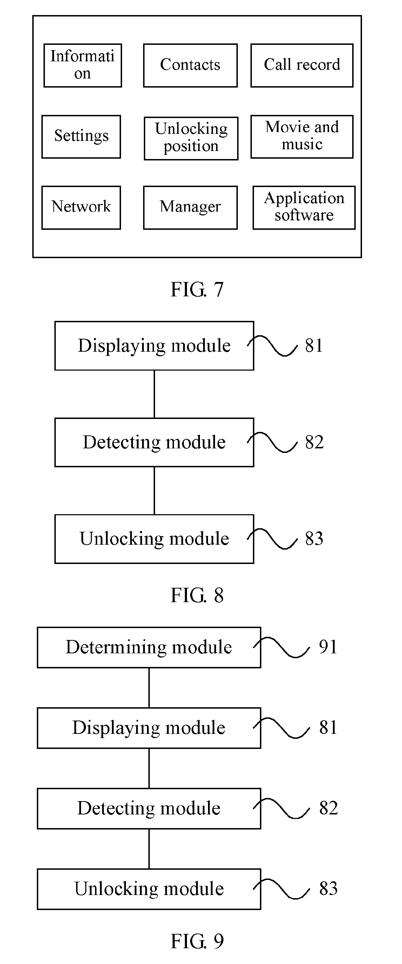

Further, this embodiment may further include the step that the touch screen terminal determines one group of application(s) of the touch screen terminal according to the related information of executing applications by the touch screen terminal. Specifically, the touch screen terminal may determine one group of application(s) of the touch screen terminal according to the related information of executing applications by the touch screen terminal and a preset application determination policy. Specifically, the application determination policy may at least include, but not limited to, one of the following policies:
determining according to the number of times of use of each application that one group of application(s) 1 of the touch screen terminal include an application, where the number of times of use of the application is greater than a preset threshold among the applications of the touch screen terminal; as shown in FIG. 2 and FIG. 3, specifically, each application among the applications of the touch screen terminal may be re-sequenced according to the number of times of use of each application, to determine one group of application(s) 1 of the touch screen terminal;
determining one group of application(s) 2 of the touch screen terminal according to use time of each application, where the one group of application(s) 2 include an application, where the difference between use time of the application and current time is less than a preset threshold; as shown in FIG. 4 and FIG. 5, specifically, each application among the applications of the touch screen terminal may be re-sequenced according to use time of each application, to determine one group of application(s) 2 of the touch screen terminal;
determining one group of application(s) 3 of the touch screen terminal according to a priority of each application, where the one group of application(s) 3 include an application whose priority is greater than a preset threshold; as shown in FIG. 6 and FIG. 7, specifically, each application among the applications of the touch screen terminal may be re-sequenced according to a priority of each application in a system function list, to determine one group of application(s) 3 of the touch screen terminal.

In this embodiment, when the touch screen terminal is in the locked status, the touch screen terminal displays the unlocking position and the icon(s) of the one group of application(s) of the touch screen terminal, and then the touch screen terminal detects whether an icon of an application among the one group of application(s) is dragged to the unlocking position, so that when the touch screen terminal detects that the icon of the application among the one group of application(s) is dragged to the unlocking position, the touch screen terminal can execute the unlocking operation and start running the detected application. Because the one group of application(s) are determined by the touch screen terminal according to the related information of executing applications by the touch screen terminal, the flexibility of the unlocking operation is improved, and further, the efficiency of the unlocking operation is improved.

It should be noted that, for brief description, each of the above method embodiments is represented as a series of actions. But those skilled in the art should understand that the present invention is not limited to the order of the described actions, because according to the present invention, some steps may be executed by adopting other order or may be executed simultaneously. In addition, those skilled in the art should understand that the described embodiments in the specification all belong to exemplary embodiments, and the involved actions and modules are not necessarily required by the present invention.

In the above embodiments, the description of each embodiment has its emphasis, and for the part which is not detailed in an embodiment, reference may be made to the relevant description of other embodiments.

FIG. 8 is a schematic structural diagram of a touch screen terminal provided by Embodiment 2 of the present invention, and as shown in FIG. 8, the touch screen terminal of the embodiment may include a displaying module 81, a detecting module 82 and an unlocking module 83. The displaying module 81 is configured to display an unlocking position and icon(s) of one group of application(s) of the touch screen terminal when the touch screen terminal is in a locked status, where the one group of application(s) are determined by the touch screen terminal according to related information of executing applications by the touch screen terminal; the detecting module 82 is configured to detect whether an icon of an application among the one group of application(s) is dragged to the unlocking position; and the unlocking module 83 is configured to execute an unlocking operation and start running the application detected by the detecting module, when the detecting module 82 detects that the icon of the application among the one group of application(s) is dragged to the unlocking position.

The function of the touch screen terminal in Embodiment 1 of the present invention may be implemented by the touch screen terminal provided by the embodiment of the present invention.

In this embodiment, when the touch screen terminal is in the locked status, the touch screen terminal displays the unlocking position and icon(s) of one group of application(s) of the touch screen terminal through the displaying module, and then the detecting module detects whether an icon of an application among the one group of application(s) is dragged to the unlocking position, so that when the detecting module detects that the icon of the application among the one group of application(s) is dragged to the unlocking position, the unlocking module can execute the unlocking operation and start running the detected application. Because the applications combination/one group of application(s) is acquired and determined by the touch screen terminal according to the related information of executing applications by the touch screen terminal, the flexibility of the unlocking operation is improved, and further, the efficiency of the unlocking operation is improved.

Further, as shown in FIG. 9, the touch screen terminal of this embodiment may further include a determining module 91, configured to determine one group of application(s) of the touch screen terminal according to the related information of executing applications by the touch screen terminal. Specifically, the determining module 91 may determine one group of application(s) of the touch screen terminal according to the related information of executing applications by the touch screen terminal and a preset application determination policy. Specifically, the determining module 91 may at least include any one of the following units:
a first determining unit, configured to determine according to the number of times of use of each application that the one group of application(s) include an application, where the number of times of use of the application is greater than a preset threshold among the applications of the touch screen terminal; specifically, each application among the applications of the touch screen terminal may be re-sequenced according to the number of times of use of each application, to determine the one group of application(s) of the touch screen terminal;
a second determining unit, configured to determine according to use time of each application that the one group of application(s) include an application, where the difference between use time of the application and current time is less than a preset threshold among the applications of the touch screen terminal; specifically, each application among the applications of the touch screen terminal may be re-sequenced according to use time of each application, to determine the one group of application(s) of the touch screen terminal;
a third determining unit, configured to determine according to a priority of each application that the one group of application(s) include an application whose priority is greater than a preset threshold among the applications of the touch screen terminal, where specifically, each application among the applications of the touch screen terminal may be re-sequenced according to a priority of each application in a system function list, to determine the one group of application(s) of the touch screen terminal.

Persons of ordinary skill in the art should understand that all or a part of the steps of the method in the embodiments of the present invention may be implemented by a program instructing relevant hardware. The program may be stored in a computer readable storage medium. When the program runs, the steps of the method in the embodiments of the present invention are performed. The storage medium may be any medium that is capable of storing program codes, such as a ROM, a RAM, a magnetic disk, or an optical disk.

Finally, it should be noted that the foregoing embodiments of the present invention are merely intended to describe the technical solutions of the present invention, but not intended to limit the present invention. Although the present invention is described in detail with reference to the foregoing embodiments, persons of ordinary skill in the art should understand that they can still make modifications to the technical solutions described in the foregoing embodiments, or make equivalent substitutions to some technical features thereof, and such modification and substitutions cannot make the essence of the corresponding technical solutions depart from the idea and scope of the technical solutions of the embodiments of the present invention.

## Claims

1. An unlocking method of a touch screen terminal, comprising:
displaying, by a touch screen terminal, an unlocking position and icon(s) of one group of application(s) of the touch screen terminal when the touch screen terminal is in a locked status, wherein the one group of application(s) are determined by the touch screen terminal according to related information of executing applications by the touch screen terminal;
detecting, by the touch screen terminal, whether an icon of an application among the one group of application(s) is dragged to the unlocking position; and
executing, by the touch screen terminal, an unlocking operation and starting running the detected application when the touch screen terminal detects that the icon of the application among the one group of application(s) is dragged to the unlocking position.

2. The method according to claim 1, further comprising:
determining, by the touch screen terminal, the one group of application(s) of the touch screen terminal according to the related information of executing applications by the touch screen terminal.

3. The method according to claim 2, wherein the determining, by the touch screen terminal, the one group of application(s) of the touch screen terminal according to the related information of executing applications by the touch screen terminal comprises:
determining, by the touch screen terminal, the one group of application(s) of the touch screen terminal according to the related information of executing applications by the touch screen terminal and a preset application determination policy.

4. The method according to claim 3, wherein the application determination policy at least comprises one of the following policies:
determining, according to the number of times of use of each application, that the one group of application(s) comprise an application, wherein the number of times of use of the application is greater than a preset threshold among the applications of the touch screen terminal;
determining, according to use time of each application, that the one group of application(s) comprise an application, wherein a difference between use time of the application and current time is less than a preset threshold among the applications of the touch screen terminal;
determining, according to a priority of each application, that the one group of application(s) comprise an application whose priority is greater than a preset threshold among the applications of the touch screen terminal.

5. A touch screen terminal, comprising:
a displaying module, configured to display an unlocking position and icon(s) of one group of application(s) of the touch screen terminal when the touch screen terminal is in a locked status, wherein the one group of application(s) are determined by the touch screen terminal according to related information of executing applications by the touch screen terminal;
a detecting module, configured to detect whether an icon of an application among the one group of application(s) is dragged to the unlocking position; and
an unlocking module, configured to execute an unlocking operation and start running the application detected by the detecting module, when the detecting module detects that the icon of the application among the one group of application(s) is dragged to the unlocking position.

6. The touch screen terminal according to claim 5, further comprising a determining module, configured to determine the one group of application(s) of the touch screen terminal according to the related information of executing applications by the touch screen terminal.

7. The touch screen terminal according to claim 6, wherein the determining module is specifically configured to:
determine the one group of application(s) of the touch screen terminal according to the related information of executing applications by the touch screen terminal and a preset application determination policy.

8. The touch screen terminal according to claim 7, wherein the determining module at least comprises any one of the following units:
a first determining unit, configured to determine, according to the number of times of use of each application, that the one group of application(s) comprise an application, wherein the number of times of use of the application is greater than a preset threshold among the applications of the touch screen terminal;
a second determining unit, configured to determine, according to use time of each application, that the one group of application(s) comprise an application, wherein a difference between use time of the application and current time is less than a preset threshold among the applications of the touch screen terminal; and
a third determining unit, configured to determine, according to a priority of each application, that the one group of application(s) comprise application whose priority is greater than a preset threshold among the applications of the touch screen terminal.
